# EUROPEAN PATENT APPLICATION

(11) **EP 2 314 836 A1**
(43) Date of publication of application: **27.04.2011**
(21) Application number: 09762418.3
(22) Date of filing: 04.06.2009
(51) Int. Cl.: F01N 3/20, B01D 53/94, F01N 3/24, F01N 3/36

(54) **EXHAUST GAS PURIFICATION APPARATUS FOR INTERNAL COMBUSTION ENGINE**

(30) Priority: 13.06.2008 JP 2008154963
(71) Applicant: Toyota Jidosha Kabushiki Kaisha, Toyota-shi, Aichi 471-8571 (JP)
(72) Inventor: HIROTA, Shinya, Toyota-shi Aichi 471-8571 (JP)
(74) Representative: Kuhnen & Wacker
(86) International application number: PCT/JP2009/060226
(87) International publication number: WO 2009/150988

(57) **Abstract**

In an exhaust gas purification apparatus of an internal combustion engine, there is provided a technique that is able to quickly raise the temperature of a catalyst arranged at a downstream side by raising the temperature of a catalyst arranged at an upstream side in a quick manner. The apparatus is provided with an exhaust gas purification catalyst, a plurality of catalysts that are arranged at an upstream side of the exhaust gas purification catalyst and have oxidizing ability, a fuel supply device (35) that supplies fuel to one catalyst (31) which is arranged at the most upstream side, and a heating device (36) that heats the one catalyst (31), wherein the plurality of catalysts having oxidizing ability are arranged in an exhaust passage in series to the direction of flow of an exhaust gas, and the more upstream side the catalysts are arranged at, the smaller the cross-sectional areas of the catalysts formed by cutting planes which are orthogonal to a central axis of the exhaust passage are made.

## Description

### TECHNICAL FIELD

The present invention relates to an exhaust gas purification apparatus of an internal combustion engine.

### BACKGROUND ART

There has been known a technique in which heat can be generated by supplying a reducing agent to an oxidation catalyst, so that the temperature of an exhaust gas can thereby be raised, as a result of which the temperature of a catalyst arranged at a location downstream of the oxidation catalyst is raised (for example, see a first patent document).

However, at the time of cold start of an internal combustion engine, the temperature of the oxidation catalyst is low, so the reducing agent hardly reacts with the oxidation catalyst. Therefore, heating the oxidation catalyst by means of a heater, etc., is carried out. However, because the heat generated by the heater, etc., is taken by the exhaust gas as the exhaust gas passes through the oxidation catalyst, the temperature rise of the oxidation catalyst becomes slow. On the other hand, when an amount of heat more than the heat taken by the exhaust gas is to be generated, it has been necessary to enlarge the size of the oxidation catalyst, or to increase the amount of electric power used by the heater, etc.

### PRIOR ART REFERENCES

### Patent Documents

First Patent Document: Japanese patent application laid-open No. 2005-127257
Second Patent Document: Japanese patent application laid-open No. 2004-162611
Third Patent Document: Japanese patent application laid-open No. H6-106068
Fourth Patent Document: Japanese patent application laid-open No. 2003-120264
Fifth Patent Document: Japanese patent application laid-open No. 2006-161629
Sixth Patent Document: Japanese patent application laid-open No. H9-504349

### SUMMARY OF THE INVENTION

### PROBLEMS TO BE SOLVED BY THE INVENTION

The present invention has been made in view of the above-mentioned problems, and has for its object to provide a technique which is capable of quickly raising the temperature of a catalyst arranged at a downstream side by raising the temperature of a catalyst arranged at an upstream side in a quick manner.

### MEANS FOR SOLVING THE PROBLEMS

In order to achieve the above-mentioned object, an exhaust gas purification apparatus of an internal combustion engine according to the present invention adopts the following measures. That is, the exhaust gas purification apparatus of an internal combustion engine according to the present invention is characterized by comprising:
an exhaust gas purification catalyst that is arranged in an exhaust passage of the internal combustion engine for purifying an exhaust gas;
a plurality of catalysts that are arranged at an upstream side of said exhaust gas purification catalyst and have oxidizing ability;
a fuel supply device that supplies fuel to one of said plurality of catalysts having oxidizing ability which is arranged at the most upstream side thereof;
a heating device that heats said one catalyst;
wherein
said plurality of catalysts having oxidizing ability are arranged in the exhaust passage in series to the direction of flow of the exhaust gas, and the more upstream side the catalysts are arranged at, the smaller the cross-sectional areas of the catalysts formed by cutting planes which are orthogonal to a central axis of the exhaust passage are made.

Here, the more downstream side the plurality of catalysts having oxidizing ability are arranged at, the larger the cross-sectional areas of the catalysts become, so a gas passing through the inside of a catalyst which is arranged at an upstream side, and a gas passing through the outside of the catalyst which is arranged at the upstream side, flow into a catalyst which is arranged at a downstream side thereof. The gas having passed through the inside of the catalyst which is arranged at the upstream side becomes high in temperature due to the reaction of fuel in this catalyst. In addition, a part of fuel which has not yet reacted is included in this gas. Moreover, oxygen is consumed inside the catalyst which is arranged at the upstream side, so the oxygen concentration of the gas flowing out of this catalyst becomes low. As a result, in the gas having passed through the inside of the upstream side catalyst, the fuel, which is contained therein and which can be made to react in the downstream side catalyst, decreases. On the other hand, a large amount of oxygen is contained in the gas having passed through the outside of the catalyst which is arranged at the upstream side. Thus, by taking this gas into the downstream side catalyst, oxidation of fuel can be facilitated in this downstream side catalyst.

Here, the one catalyst has a small volume, so the temperature thereof is quickly raised by means of the heating device. Then, when the temperature of the one catalyst is raised by means of the heating device, fuel can be made to react in this one catalyst. As a result of this, the temperature of the exhaust gas flowing out of the one catalyst rises, so the temperature of the following catalyst, which is arranged at the downstream side of this one catalyst, also rises. In other words, in the downstream side catalyst, the temperature thereof is caused to rise abruptly by means of the heat given from the upstream side catalyst and the heat generated in the downstream side catalyst. Thus, by raising the temperatures of the plurality of catalysts in a sequential manner, downstream side catalysts can be raised to high temperatures. Then, a large amount of heat can be generated in the plurality of catalysts having oxidizing ability, so that the temperature of the exhaust gas purification catalyst can finally be raised.

In the present invention, said exhaust gas purification catalyst can be composed of including a selective reduction type NOx catalyst which uses urea or ammonia as a reducing agent; and
an injection device can be provided which injects said reducing agent toward the exhaust gas flowing out of an other catalyst which is arranged at the most downstream side among said plurality of catalysts having oxidizing ability.

In the present invention, the temperature of the other catalyst which is arranged at the most downstream side can be raised quickly, and the other catalyst becomes a high temperature. As a result of this, the temperature of the exhaust gas flowing out of the other catalyst also becomes a high temperature, so by injecting the reducing agent toward the exhaust gas flowing out of the other catalyst, the evaporation of the reducing agent can be facilitated. In addition, the reducing agent can be dispersed to a wide range in the exhaust gas. Here, note that, the other catalyst may have its cross-sectional area smaller than that of the exhaust passage.

In the present invention, a unit is provided which measures or estimates the temperature of the exhaust gas flowing out of said other catalyst, wherein when the temperature of the exhaust gas flowing out of said other catalyst is equal to or higher than a predetermined value, the reducing agent is caused to be injected from said injection device.

The predetermined value can be a temperature at which the reducing agent can be evaporated, or a temperature at which the reducing agent can be dispersed in an effective manner. In other words, even if the reducing agent is injected at the time when the temperature of the exhaust gas flowing out of the other catalyst is low, evaporation or dispersion of the reducing agent will not be able to be expected, but there will also be a fear that the reducing agent may adhere to the exhaust gas purification catalyst. Accordingly, in cases where the temperature of the exhaust gas flowing out of the other catalyst is equal to or higher than the predetermined value, the reducing agent is caused to be injected.

In the present invention, before starting of said internal combustion engine, fuel can be supplied to said one catalyst from said fuel supply device, and said one catalyst can be heated by means of said heating device.

In other words, the temperature of the one catalyst is caused to rise before the internal combustion engine starts. On the contrary, the internal combustion engine may be started after the temperature of the one catalyst is caused to rise up to a prescribed temperature. With this, at the time of the next starting of the internal combustion engine, too, it is possible to raise the temperature of a catalyst(s) downstream of said one catalyst in a quick manner. As a result of this, in the exhaust gas purification catalyst, purification of the exhaust gas can be made at an early stage.

In the present invention, after the starting of the internal combustion engine is commenced, the amount of fuel supplied from said fuel supply device can be caused to increase according to the time elapsed.

In other words, the amount of fuel capable of being oxidized in the plurality of catalysts having oxidizing ability increases in accordance with the rising temperature of the one catalyst and/or the rising temperatures of the catalysts having oxidizing ability which are arranged at the downstream side thereof. If the amount of fuel to be supplied is increased according to this, the amount of heat generated in the plurality of catalysts having oxidizing ability will be able to be increased, so that the temperature of the exhaust gas purification catalyst can be raised in a quick manner. In addition, the supply of the reducing agent to the exhaust gas purification catalyst can be made at an early stage.

In the present invention, a unit is provided which measures or estimates the temperature of said exhaust gas purification catalyst, wherein when the temperature of said exhaust gas purification catalyst rises to the prescribed temperature, the supply of fuel from said fuel supply device to said one catalyst can be stopped, and the heating of said one catalyst by said heating device can be stopped.

If the reducing agent can be made to react in the exhaust gas purification catalyst, it will become unnecessary to raise the temperature of the catalysts having oxidizing ability. If the supply of fuel or the heating by the heating device is stopped, fuel economy or efficiency can be improved. In addition, overheating of the catalysts can be suppressed.

In the present invention, when the amount of the exhaust gas becomes more than a prescribed amount during the time fuel is being supplied from said fuel supply device, the amount of fuel supplied from said fuel supply device can be restricted.

This prescribed amount can be an amount at which there is a fear that the fuel supplied by the fuel supply device may adhere to the exhaust gas purification catalyst. In other words, when the amount of the exhaust gas increases, the time for fuel to pass through the plurality of catalysts having oxidizing ability becomes shorter, so the fuel becomes more difficult to be oxidized in the catalysts. In other words, the amount of fuel which passes through the plurality of catalysts having oxidizing ability without being oxidized therein increases. Thus, if the fuel which has passed through the catalysts having oxidizing ability adheres to the exhaust gas purification catalyst, there will be a fear that the purification ability of the exhaust gas purification catalyst may be decreased. On the other hand, by restricting the amount of fuel to be supplied, it is possible to suppress the fuel from adhering to the exhaust gas purification catalyst. Here, note that the amount of fuel to be supplied may be decreased according to the amount of the exhaust gas. In this case, the amount of fuel to be supplied may be decreased in a continuous manner or in a stepwise manner according to the amount of the exhaust gas. In addition, when the amount of the exhaust gas becomes equal to or more than the prescribed amount, the supply of fuel from the fuel supply device may be stopped.

### EFFECT OF THE INVENTION

According to an exhaust gas purification apparatus of an internal combustion engine related to the present invention, it is possible to quickly raise the temperature of a catalyst arranged at a downstream side by raising the temperature of a catalyst arranged at an upstream side in a quick manner.

### BRIEF DESCRIPTION OF THE DRAWINGS

[Fig. 1] is a view showing the schematic construction of an internal combustion engine and its exhaust system to which an exhaust gas purification apparatus of an internal combustion engine according to a first embodiment of the present invention is applied.
[Fig. 2] is a construction view of a temperature raising device.
[Fig. 3] is a flow chart showing a flow for temperature raising control on a NOx catalyst at the time of starting of the engine according to an embodiment of the present invention.
[Fig. 4] is a flow chart showing a flow for temperature raising control on the NOx catalyst after the engine has been started according to the embodiment.

### BEST MODE FOR CARRYING OUT THE INVENTION

Hereinafter, reference will be made to a specific embodiment of an exhaust gas purification apparatus of an internal combustion engine according to the present invention based on the attached drawings.

### [First Embodiment]

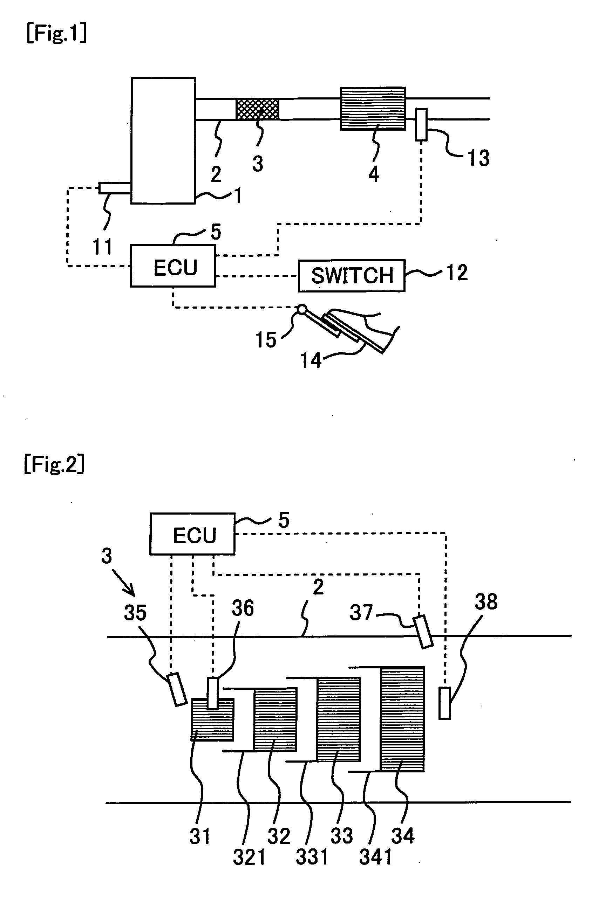

Fig. 1 is a view showing the schematic construction of an internal combustion engine and its exhaust system to which an exhaust gas purification apparatus of an internal combustion engine according to this embodiment of the present invention is applied. An internal combustion engine 1 shown in Fig. 1 is a four-cycle diesel engine of a water cooled type.

In addition, an exhaust passage 2 is connected to the internal combustion engine 1. In the middle of the exhaust passage 2, a temperature raising device 3 and a selective reduction type NOx catalyst 4 (hereinafter referred to as a NOx catalyst 4) are sequentially arranged in this order from an upstream side. The NOx catalyst 4 reduces NOx in an exhaust gas in a selective manner by supplying urea or ammonia as a reducing agent. Here, note that in this embodiment, the NOx catalyst 4 corresponds to an exhaust gas purification catalyst in the present invention.

Fig. 2 is a construction view of the temperature raising device 3. The temperature raising device 3 is provided with four oxidation catalysts including a first catalyst 31, a second catalyst 32, a third catalyst 33, and a fourth catalyst 34, which are arranged in a sequential manner from an upstream side to a downstream side, with appropriate distances between adjacent catalysts, respectively. Here, note that at least two oxidation catalysts should be provided. In addition, these catalysts should just have oxidizing ability, and may be three-way catalysts or occlusion reduction type NOx catalysts. These four oxidation catalysts are of cylindrical shapes, respectively, and the central axis of each catalyst is located on the central axis of the exhaust passage 2. Moreover, the more upstream side the catalysts are arranged at, the smaller do the cross-sectional areas of the catalysts when these catalysts are cut by planes which are orthogonal to the central axis of the exhaust passage 2 becomes. In other words, the cross-sectional area of the first catalyst 31 is the smallest, and the cross-sectional area of the fourth catalyst 34 is the largest. The cross-sectional area of the fourth catalyst 34 is smaller than the passage sectional area of the exhaust passage 2. Also, the more downstream side the oxidation catalysts are arranged at, the larger the volumes of the oxidation catalysts are. In addition, the second catalyst 32, the third catalyst 33, and the fourth catalyst 34 are formed with the cylindrical guides 321, 331, 341, respectively, which extend toward the upstream side from the outer peripheries of the individual catalysts, respectively. Each of these guides 321, 331, 341 extends up to a more upstream side than the downstream end of the catalyst which is arranged at an immediately upstream side of each of the catalysts. Here, note that in this embodiment, the first catalyst 31, the second catalyst 32, the third catalyst 33, and the fourth catalyst 34 correspond to a plurality of catalysts having oxidizing ability in the present invention.

A first injection valve 35 for injecting fuel is arranged at the upstream of the first catalyst 31. The first injection valve 35 has its nozzle hole directed to the center of an upstream end face of the first catalyst 31. In addition, the first catalyst 31 is provided with a heater 36 which serves to heat the first catalyst 31. This heater 36 generates heat by being supplied with electric power. In other words, the first injection valve 35 is arranged at a more upstream side than the most upstream side oxidation catalyst, and the heater 36 is mounted on the most upstream side oxidation catalyst. The nozzle hole of the first injection valve 35 may be arranged to be directed to a place which is to be heated by the heater 36. Here, note that in this embodiment, the first catalyst 31 corresponds to one catalyst in the present invention. Also, in this embodiment, the first injection valve 35 corresponds to a fuel supply device in the present invention. Further, in this embodiment, the heater 36 corresponds to a heating device in the present invention.

A second injection valve 37 for injecting a liquid in which urea or ammonia is contained is arranged in the exhaust passage 2 at a location in the vicinity of the fourth catalyst 34. The liquid having urea or ammonia contained therein acts as a reducing agent in the NOx catalyst 4. The second injection valve 37 has its nozzle hole directed to a stream of exhaust gas which flows out of the fourth catalyst 34. Here, note that in this embodiment, the fourth catalyst 34 corresponds to an other catalyst in the present invention. Also, in this embodiment, the second injection valve 37 corresponds to an injection device in the present invention.

In addition, a first temperature sensor 38 for measuring the temperature of the exhaust gas is arranged at a location downstream of the fourth catalyst 34. By this first temperature sensor 38, the temperature of the fourth catalyst 34 or the temperature of the exhaust gas flowing out of the fourth catalyst 34 is measured. Here, note that by the first temperature sensor 38, the temperature of the temperature raising device 3 or the temperature of the exhaust gas flowing into the NOx catalyst 4 can also be measured. In addition, a second temperature sensor 13 for measuring the temperature of the exhaust gas is arranged in the exhaust passage 2 at a location downstream of the fourth catalyst 4. The temperature of the NOx catalyst 4 can also be measured by this second temperature sensor 13. Here, note that in this embodiment, the first temperature sensor 38 corresponds to a unit which measures or estimates the temperature of the other catalyst in the present invention. Moreover, in this embodiment, the second temperature sensor 13 corresponds to a unit which measures or estimates the temperature of the exhaust gas purification catalyst in the present invention.

Further, a crank angle sensor 11 for measuring the number of revolutions per unit time of the internal combustion engine 1 is mounted on the internal combustion engine 1.

In the internal combustion engine 1 constructed as stated above, there is arranged in combination therewith an ECU 5 which is an electronic control unit for controlling the internal combustion engine 1. This ECU 5 is a unit that controls the operating state of the internal combustion engine 1 in accordance with the operating conditions of the internal combustion engine 1 and/ or driver's requirements.

Besides the above-mentioned sensors, an accelerator opening sensor 15, which is able to detect an engine load by outputting an electrical signal corresponding to an amount by which a driver depressed an accelerator pedal 14, and a switch 12, which serves to start the internal combustion engine 1, are connected to the ECU 5 through wiring, and the output signals of the variety of kinds of sensors are inputted to the ECU 5. With the switch 12 being operated by the driver, the ECU 5 starts up the internal combustion engine 1.

On the other hand, the first injection valve 35 and the second injection valve 37 are connected to the ECU 5 through electrical wiring, so that these valves are controlled by means of the ECU 5.

With the arrangement of the four oxidation catalysts 31, 32, 33, 34 as in this embodiment, most of the exhaust gas having passed through an upstream side oxidation catalyst flows into the following oxidation catalyst at the downstream side thereof. In other words, the gas having flown out of each of the oxidation catalysts flows through the inside of the guide formed in each of the following downstream side oxidation catalysts, and flows into the downstream side oxidation catalysts. On the other hand, because there is a gap between each of the upstream side oxidation catalysts and the guide of the following each downstream side oxidation catalyst, a part of the exhaust gas having passed through the outside of each upstream side oxidation catalyst flows into the following each downstream side oxidation catalyst.

Here, when the heater 36 is energized with electric power and fuel is injected from the first injection valve 35, the fuel reacts in the first catalyst 31 to generate heat. As a result of this, the temperature of exhaust gas is raised. Then, when the exhaust gas thus heated flows into the second catalyst 32, the temperature of the second catalyst 32 is raised. In the exhaust gas flowing into this second catalyst 32, there is contained fuel which did not react or reacted insufficiently in the first catalyst 31. However, when the exhaust gas passes through the interior of the first catalyst 31, oxygen reacts with the fuel in the first catalyst 31, so there remains only a small amount of oxygen in the exhaust gas which flows out of the first catalyst. On the other hand, a part of the exhaust gas, which passed through the outside of the first catalyst 31, also flows into the second catalyst 32. A lot of oxygen is contained in the exhaust gas which passed through the outside of this first catalyst 31. In other words, the fuel flowing out of the first catalyst 31 and the exhaust gas having much oxygen contained therein because of passing through the outside of the first catalyst 31 flow into the second catalyst 32. Therefore, in the second catalyst 32, too, fuel and oxygen react with each other to generate heat. As a result, the temperature of the exhaust gas is further raised. Such things also occur in the third catalyst 33 and the fourth catalyst 34, too.

In other words, the temperature of the exhaust gas is raised in each of the oxidation catalysts due to the oxygen taken in by each oxidation catalyst. With this, the temperature of their downstream side catalysts can be further raised. For example, with such an arrangement, the temperature of the exhaust gas which arrives at the NOx catalyst 4 can be made higher than that in cases where one single oxidation catalyst is provided which has the same volume as the sum total of the volumes of the four oxidation catalysts and in cases where the same amount of fuel is supplied. That is, according to this embodiment, the temperature of the NOx catalyst 4 can be quickly raised with a smaller amount of fuel.

In addition, in this embodiment, by injecting the reducing agent injected from the second injection valve 37 toward the exhaust gas flowing out of the fourth catalyst 34, evaporation of the reducing agent is made to facilitate or the reducing agent is made to disperse in a wide area. Here, the fourth catalyst 34 is made high in temperature due to the heat generated in the three catalysts, which are arranged at the upstream side of the fourth catalyst 34, and the heat generated in this fourth catalyst 34. Therefore, by injecting the reducing agent toward the exhaust gas flowing out of this fourth catalyst 34, the reducing agent can be evaporated and dispersed in a quick manner. Here, note that the reducing agent may be injected from the second injection valve 37 only in cases where the evaporation and dispersion of the reducing agent can be carried out to a sufficient extent. In other words, in cases where the temperature of the exhaust gas flowing out of the fourth catalyst 34 is equal to or higher than a threshold value, it is decided that the evaporation and dispersion of the reducing agent can be done to a sufficient extent, and the reducing agent may be injected. This threshold value has beforehand been obtained through experiments, etc.

Then, in this embodiment, in cases where the temperature of the NOx catalyst 4 is lower than a lower limit value of an activation temperature thereof at the time of cold starting of the internal combustion engine 1, etc., the following control is carried out so as to quickly raise the temperature of the NOx catalyst 4.

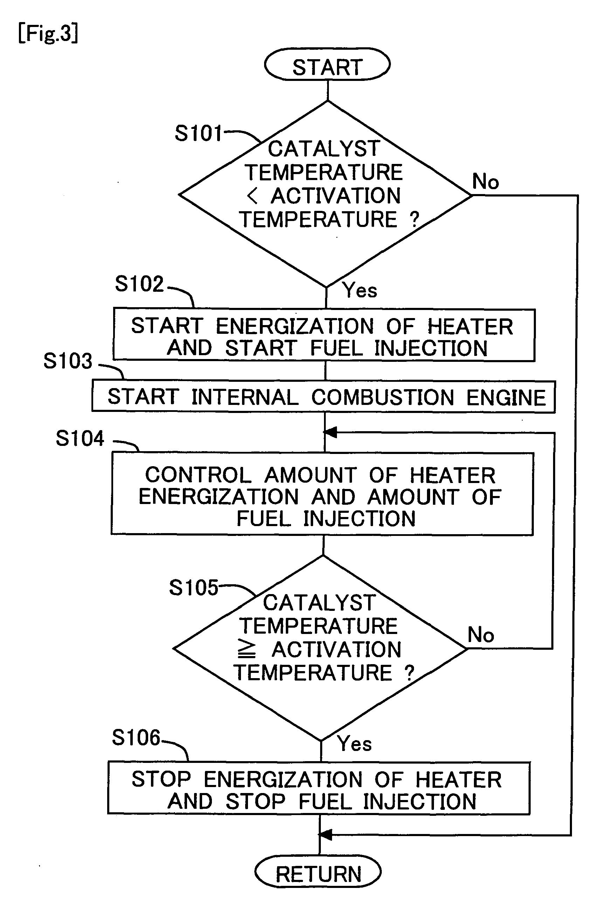

Fig. 3 is a flow chart showing a flow for temperature raising control on the NOx catalyst 4 at the time of engine starting according to this embodiment. This routine is executed at the time of starting of the internal combustion engine 1. Here, note that in this embodiment, even when the driver operates the switch 12 in order to start the internal combustion engine 1, the temperature of the first catalyst 31 is first raised without immediately starting the internal combustion engine 1.

In step S101, the ECU 5 determines whether the temperature of the NOx catalyst 4 is lower than the lower limit value (e.g., 150 degrees C) of the activation temperature. In other words, it is determined whether reduction of NOx can not be carried out in the NOx catalyst 4. For example, when the temperature obtained by the second temperature sensor 13 is lower than a threshold value, it is assumed that the temperature of the NOx catalyst 4 is lower than the lower limit value of the activation temperature.

In cases where an affirmative determination is made in step S101, the routine advances to step S102, whereas in cases where a negative determination is made, this routine is ended. In cases where this routine is ended, the internal combustion engine 1 is started immediately. Then, the reducing agent is injected from the second fuel injection valve 37, without being accompanied by a temperature rise of exhaust gas by means of the temperature raising device 3, so that NOx is purified.

In step S102, the ECU 5 starts energization of the heater 36 and the injection of fuel from the first injection valve 35. At this time, the internal combustion engine 1 is not operated, so there is no flow of exhaust gas. Therefore, it is suppressed that the heat generated in the first catalyst 31 is taken by the exhaust gas, and hence the temperature of this first catalyst 31 rises quickly.

In step S103, the ECU 5 starts the internal combustion engine 1. In other words, fuel is supplied to combustion chambers of the internal combustion engine 1. Alternatively, when the temperature of the first catalyst 31 reaches a prescribed temperature by executing the processing of step S102, the internal combustion engine 1 may be started. Also, alternatively, when a prescribed period of time has elapsed after the execution of the processing of step S101, the internal combustion engine 1 may be started.

In step S104, the ECU 5 executes energization control on the heater 36, and injection control on the first injection valve 35. In this step, the heater 36 and the first injection valve 35 are controlled by the number of engine revolutions per minute, the engine load, and the elapsed time from the start of execution of this step. In other words, energization of the heater 36 is carried out, or energization of the heater 36 is stopped, or the amount of fuel injected from the first injection valve 35 is adjusted. Here, the amount of heat generated and the temperature in each catalyst change according to the number of engine revolutions per minute, the engine load, and the elapsed time from the start of this step, so the amount of heat generation is adjusted according to these factors. In general, the longer the elapsed time, the higher the degree of activity of each of the oxidation catalysts becomes, so the amount of fuel injected from the first injection valve 35 is caused to increase. Here, the fuel injection from the first injection valve 35 is carried out in an intermittent manner. Then, the increase in the amount of fuel injected from the first injection valve 35 is carried out by at least one of lengthening the time of fuel injection and shortening the interval of injection. Then, the heater 36 is energized in response to the injection of fuel from the first injection valve 35. The time of energization of the heater 36 may be made longer in accordance with the increasing amount of fuel injection.

In step S105, the ECU 5 determines whether the temperature of the NOx catalyst 4 is equal to or higher than the lower limit value of the activation temperature. In other words, it is determined whether heating by the temperature raising device 3 has become unnecessary. In cases where an affirmative determination is made in step S105, the routine advances to step S106, whereas in cases where a negative determination is made, the routine returns to step S104.

In step S106, the ECU 5 stops the energization of the heater 36 and the injection of fuel from the first injection valve 35. In other words, the raising of the temperature of the exhaust gas by means of the temperature raising device 3 is stopped. After this, NOx is reduced in the NOx catalyst 4 by injecting the reducing agent from the second injection valve 37.

Here, note that the energization of the heater 36 may be stopped and the fuel injection from the first injection valve 35 may be stopped at the time when an amount of fuel required to generate a necessary amount of heat has been supplied.

In addition, when fuel is injected from the first injection valve 35 during the time the number of engine revolutions per minute is high, the flow rate of the exhaust gas increases, so there is a fear that the fuel may pass or sneak through the oxidation catalysts. When the fuel passes or sneaks through the oxidation catalysts, there is a fear that the fuel may adhere to the NOx catalyst 4, thus decreasing the purification ability for NOx. Accordingly, when the number of engine revolutions per minute becomes equal to or more than a threshold value, or when the amount of exhaust gas becomes equal to or more than a threshold value, the energization of the heater 36 may be stopped and the fuel injection from the first injection valve 35 may be stopped. In addition, the amount of fuel injection may also be decreased. At this time, the amount of energization or electric power to be supplied to the heater 36 and the amount of fuel to be injected from the first injection valve 35 may be adjusted according to the number of engine revolutions per minute or the amount of exhaust gas. In other words, the amount energization or electric power to be supplied to the heater 36 may be decreased, and the amount of fuel injected from the first injection valve 35 may be decreased, in accordance with the increasing number of engine revolutions per minute, or the increasing flow rate of exhaust gas.

Here, note that even after the temperature of the NOx catalyst 4 has once become equal to or higher than the lower limit value of the activation temperature, the temperature of the NOx catalyst 4 may become lower than the lower limit value of the activation temperature, depending on the operating state of the internal combustion engine 1. In this case, energization of the heater 36 and fuel injection from the first injection valve 35 are carried out again, thereby causing the temperature of the NOx catalyst 4 to rise.

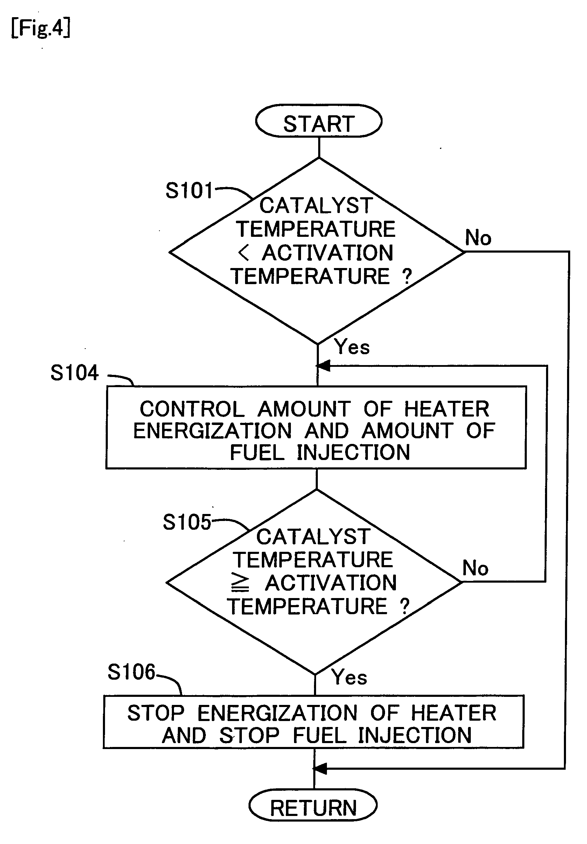

Fig. 4 is a flow chart showing a flow for temperature raising control on the NOx catalyst 4 after engine starting according to this embodiment. This routine is carried out in a repeated manner at each predetermined time interval. Here, note that in comparison with the flow shown in Fig. 3, only step S102 and step S103 are lacking, so the explanation of this routine is omitted.

As explained above, according to this embodiment, by the provision of the four oxidation catalysts in which the more downstream side they are arranged at, the larger their cross-sectional areas become, it is possible to raise the temperature of the NOx catalyst 4 more quickly with a small amount of fuel. In addition, the temperature of the fourth catalyst 34 can be raised to a high temperature, so the evaporation and dispersion of the reducing agent can be facilitated. That is, the reducing agent can be supplied to the NOx catalyst 4 in a uniform manner, while causing the temperature of the NOx catalyst 4 to rise up to the lower limit value of the activation temperature thereof in a quick manner, so the purification ability thereof for NOx can be enhanced.

Here, note that in this embodiment, the individual central axes of the four oxidation catalyst are located on the central axis of the exhaust passage 2, but the central axes of these catalysts may be arranged out of alignment with the central axis of the exhaust passage 2. In addition, the central axes of the individual oxidation catalysts may not be on the same line. In other words, the structure may be such that the exhaust gas having passed through the inside of an upstream side oxidation catalyst and the exhaust gas having passed through the outside thereof flow into the following downstream side oxidation catalyst. Moreover, the guides 321, 331, 341 may be omitted.

### EXPLANATION OF REFERENCE NUMERALS AND CHARACTERS

- 1: Internal combustion engine
- 2: Exhaust passage
- 3: Temperature raising device
- 4: Occlusion reduction type NOx catalyst
- 5: ECU
- 11: Crank angle sensor
- 12: Switch
- 13: Second temperature sensor
- 14: Accelerator pedal
- 15: Accelerator opening sensor
- 31: First catalyst
- 32: Second catalyst
- 33: Third catalyst
- 34: Fourth catalyst
- 35: First injection valve
- 36: Heater
- 37: Second injection valve
- 38: First temperature sensor

## Claims

1. An exhaust gas purification apparatus of an internal combustion engine **characterized by** comprising:
an exhaust gas purification catalyst that is arranged in an exhaust passage of the internal combustion engine for purifying an exhaust gas;
a plurality of catalysts that are arranged at an upstream side of said exhaust gas purification catalyst and have oxidizing ability;
a fuel supply device that supplies fuel to one of said plurality of catalysts having oxidizing ability which is arranged at the most upstream side thereof;
a heating device that heats said one catalyst;
wherein
said plurality of catalysts having oxidizing ability are arranged in the exhaust passage in series to the direction of flow of an exhaust gas, and the more upstream side the catalysts are arranged at, the smaller the cross-sectional areas of said catalysts formed by cutting planes which are orthogonal to a central axis of said exhaust passage are made.

2. The exhaust gas purification apparatus of an internal combustion engine as set forth in claim 1, **characterized in that**
said exhaust gas purification catalyst is composed of including a selective reduction type NOx catalyst which uses urea or ammonia as a reducing agent; and
an injection device is provided which injects said reducing agent toward the exhaust gas flowing out of an other catalyst which is arranged at the most downstream side among said plurality of catalysts having oxidizing ability.

3. The exhaust gas purification apparatus of an internal combustion engine as set forth in claim 2, **characterized by** further comprising: a unit that measures or estimates the temperature of the exhaust gas flowing out of said other catalyst, wherein when the temperature of the exhaust gas flowing out of said other catalyst is equal to or higher than a predetermined value, the reducing agent is caused to be injected from said injection device.

4. The exhaust gas purification apparatus of an internal combustion engine as set forth in any one of claims 1 through 3, **characterized in that** before starting of said internal combustion engine, fuel is supplied to said one catalyst from said fuel supply device, and said one catalyst is heated by means of said heating device.

5. The exhaust gas purification apparatus of an internal combustion engine as set forth in claim 4, **characterized in that** after the starting of the internal combustion engine is commenced, the amount of fuel supplied from said fuel supply device is caused to increase according to the time elapsed.

6. The exhaust gas purification apparatus of an internal combustion engine as set forth in claim 4 or 5, **characterized by** further comprising: a unit that measures or estimates the temperature of said exhaust gas purification catalyst, wherein when the temperature of said exhaust gas purification catalyst rises to a prescribed temperature, the supply of fuel from said fuel supply device to said one catalyst is stopped, and the heating of said one catalyst by said heating device is stopped.

7. The exhaust gas purification apparatus of an internal combustion engine as set forth in any one of claims 4 through 6, **characterized in that** when the amount of the exhaust gas becomes more than a prescribed amount during the time fuel is being supplied from said fuel supply device, the amount of fuel supplied from said fuel supply device is restricted.
the smaller the cross-sectional areas of said catalysts formed by cutting planes which are orthogonal to a central axis of said exhaust passage are made, and
said cross-sectional area of at least said one catalyst is made smaller than the cross-sectional area of said exhaust passage.
